Europäisches Patentamt

**European Patent Office**

**Office européen des brevets**

(19)

(11) Veröffentlichungsnummer: **0 059 965**

**A1**

(12) # EUROPÄISCHE PATENTANMELDUNG

(21) Anmeldenummer: 82101795.1

(22) Anmeldetag: 06.03.82

(51) Int. Cl.³: **E 04 C 2/54**
**E 04 C 2/36, A 01 G 9/14**

(30) Priorität: 07.03.81 DE 3108711

(43) Veröffentlichungstag der Anmeldung:
15.09.82 Patentblatt 82/37

(84) Benannte Vertragsstaaten: ·
IT

(71) Anmelder: Röhm GmbH
Kirschenallee Postfach 4242
D-6100 Darmstadt 1(DE)

(71) Anmelder: Heescher, Felix
Rodder Strasse 31
D-4446 Hörstel-Bevergern(DE)

(72) Erfinder: Heescher, Felix
Rodder Strasse 31
D-4446 Hörstel-Bevergern(DE)

(54) Als Bauelement dienende Stegplatte.

(57) Die Erfindung betrifft ein aus einer Mehrfachstegplatte hergestelltes Bauelement und seine Verwendung, wobei aus dem Material der Platte ausgeformte oder mit der Platte fest verbundene Profilierungen vorgesehen sind, die der leichteren konstruktiven Handhabung der Platte dienen.

Fig. 2

EP 0 059 965 A1

Firma Felix Heescher Gesellschaft mit beschränkter Haftung,
Rheiner Str. 31, 4441 Bevergern

"Als Bauelement dienende Stegplatte"

Die Erfindung bezieht sich auf eine als Bauelement dienende, aus
einem durchsichtigen Kunststoff bestehende Stegplatte, vorzugsweise Doppelsteg- oder Mehrfachstegplatte.

Insbesondere im Gewächshausbau, hierauf aber keineswegs beschränkt,
ist es bekannt, sogenannte Doppelsteg- oder Mehrfachstegplatten
einzusetzen, die aus zwei ebenen Kunststoffscheiben bestehen, die
miteinander durch einen bestimmten Abstand voneinander aufweisende
Stege verbunden sind. Es ist weiterhin bekannt, diese Platten
zu wölben, wobei die Wölbung keinen sehr großen Biegeradius aufweisen kann und um eine Biegeachse erfolgt, die quer zur Längserstreckung der Stege ausgerichtet ist. Versuche, die bekannten
Platten um eine Biegeachse zu biegen, die parallel zur Längserstreckung der Stege ausgerichtet war, führten zum Zerstören der
Platten. Solche biegefähigen Doppelsteg- oder Mehrfachstegplatten
bestehen vorzugsweise aus Polycarbonat. Aufgrund der Tatsache der
nur quer zur Stegerstreckung möglichen Biegung werden die Doppelstegplatten im wesentlichen nur als plattenförmige Bauteile geliefert, wobei dann an den Randkanten dieser plattenförmigen Bauteile aus Metall oder Kunststoff oder Kombinationen dieser beiden
Werkstoffe bestehende, kostenaufwendig herzustellende Verbindungselemente angeschlossen werden müssen, die einerseits ein dichtes Anschließen der Platten aneinander, andererseits eine Bewegung der Platten zur Aufnahme der Wärmedehnungen bezwecken.

Der Einsatz dieser bekannten Platten, insbesondere für Dachabdeckung von Gewächshäusern, zur Dachabdeckung von Schwimmbädern o.dgl., d.h. also für großflächige Dachabdeckungen hat gezeigt, daß eine einwandfreie zufriedenstellende Abdichtung in den aneinander angrenzenden Plattenbereichen nur schwer, d.h. unter erheblichem Kostenaufwand herstellbar ist und daß diese verschleißempfindlichen Teile einen hohen Wartungsbedarf bewirken, der bisher dem Einsatz dieser Platten hinderlich im Wege stand. Außerdem machen diese die Platten tragenden Konstruktionsbauteile einen erheblichen Aufwand notwendig, der zur Erstellung fester und damit teurer Gebäude zwingt.

Der Erfindung liegt die Aufgabe zugrunde, die bekannten, vorzugsweise aus Polycarbonat gefertigten Doppelsteg- oder Mehrfachstegplatten so zu gestalten, daß von der Platte selbst Konstruktionselemente getragen werden können, wobei die Befestigungsmöglichkeit dieser Konstruktionselemente an den Platten unmittelbar beim Herstellungsverfahren erfolgen soll.

Diese der Erfindung zugrundeliegende Aufgabe wird durch die in den Ansprüchen genannten Merkmale gelöst, insbesondere dadurch, daß vorgesehen wird, daß Platten Konstruktionselemente aufnehmen können, die die Platten halten und auch gegebenenfalls in der Lage sind, die Formgebung und Formhalterung der Platten zu gewährleisten.

So ist es beispielsweise möglich, die Platten zu durchbohren und in diese Durchbohrungen Konstruktionselemente zu schieben und zu verankern.

Weiterhin ist es möglich, wenigstens eine der beiden durch die Stege miteinander verbundenen Plattenflächen aufzuschneiden oder bei der Herstellung der Platte offen zu gestalten und somit einen matrizenartigen Raum zu schaffen, in den ein Patrizenteil eingesetzt werden kann, das der Halterung und gegebenenfalls Formgebung der Platte dient, indem es in diesem Schlitz gehalten und geführt wird.

Weiterhin werden gemäß der Erfindung quer zur Biegeachse der Stegplatte verlaufende, einteilig aus dem Plattenwerkstoff ausgeformte oder mit dem Plattenwerkstoff materialschlüssig verbundene Profilierungen vorgeschlagen, die an der Ober- und/oder Unterseite vorgesehen werden.

Die Profilierungen sind dabei vorzugsweise schwalbenschwanzförmig gestaltet und mit diesen matrizenartigen Profilierungen arbeiten patrizenartige Bauteile zusammen, die in den durch die Profilierungen gebildeten Schlitzen verschiebbar sein können, aber hinsichtlich ihrer Lage festlegbar sind und die nun zum Anschluß von Halte- und Konstruktionsmitteln dienen, so daß beispielsweise ein Biegen der Platten möglich ist, die Biegung dieser Platte aber durch eingespannte Spannelemente aufrechterhalten wird, wobei die Spannelemente in den in der Platte vorgesehenen Profilierungen verankert werden.

Gemäß einem wesentlichen Merkmal der Erfindung ist weiterhin vorgesehen, daß die Patrizenteile sich quer zu den sie aufnehmenden Schlitzen bewegen können, so daß dadurch Wärmespannungen und Wärmedehnungen der Platten in allen möglichen Richtungen aufgenommen und ausgeglichen werden können, indem die Patrizenteile in Längsachse der Schlitze oder Profilierungen gleiten können und quer zur Längsachse in dem Patrizenteil beispielsweise Langloch oder ähnliche Bohrungen vorgesehen sind, die eine Verschiebung quer zur Achse der Profilierung oder des Einschnittes ermöglichen.

Zusammen mit den Spannelementen können gleichzeitig Befestigungselemente in den Profilierungen angeordnet werden, die z.B. zum Anschluß an dem festen Fundament dienen und damit die gebildeten Bauteile, die beispielsweise tunnelförmig gestaltet sein können, festlegen.

Außerdem können die in den Platten vorgesehenen Profilierungen zur Aufnahme zusätzlicher Elemente dienen, wie beispielsweise Schattierungsgewebe o.dgl., wobei dadurch, daß auch an der Außenseite der Platten entsprechende Profilierungen vorgesehen werden, auch an der Außenseite erforderliche Hilfsmittel somit in einfachster Weise an die Platten angeschlossen werden können.

Die Platten werden in der vorstehend erläuterten Ausführungsform mit besonderem Vorteil im Gewächshausbau, insbesondere zur

Ernteverfrühung bei Freilandgemüsebau eingesetzt.

Ein Ausführungsbeispiel der Erfindung wird nachfolgend anhand der Zeichnung erläutert. In der Zeichnung zeigt dabei

Fig. 1    schaubildlich und nur schematisch die Ausbildung der neuen Platte als gebogenes, tunnelförmiges Bauteil, in

Fig. 2    in einer ebenen Darstellung zur Verdeutlichung des Erfindungsgedankens die in der Platte vorgesehenen Profilierungen und in

Fig. 3    eine ebene Platte gemäß der Erfindung.

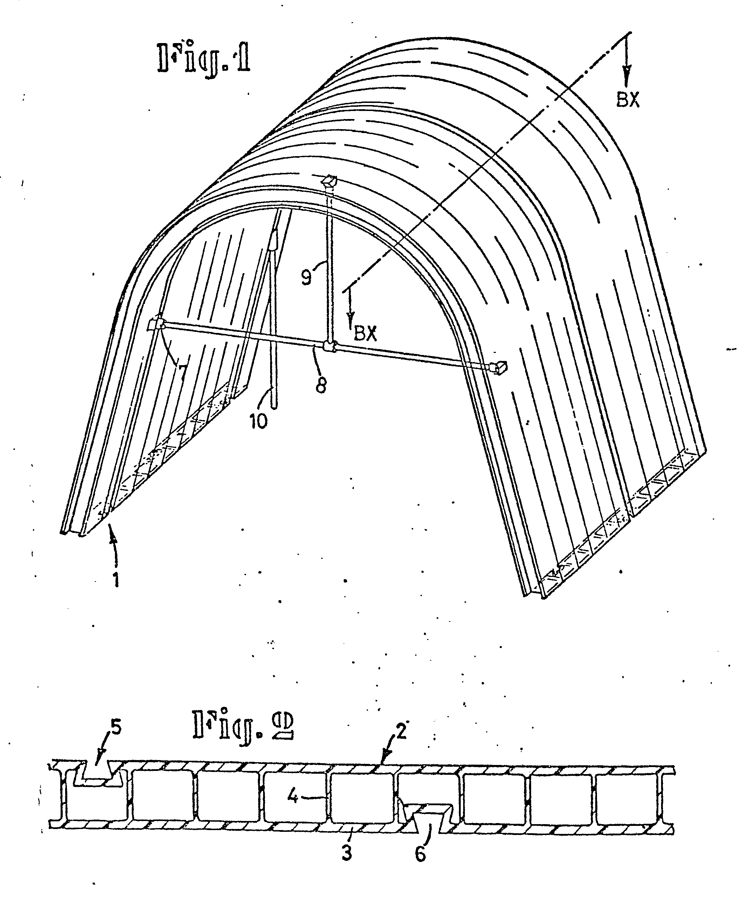

In Fig. 1 ist mit 1 eine beispielsweise aus einem Polycarbonat bestehende Stegplatte bezeichnet, die eine Plattenoberfläche 2 und eine Plattenunterseite 3 aufweist, wobei die diese beiden Platten 2 und 3 verbindenden Stege das Bezugszeichen 4 tragen. In Fig. 1 ist mit BX - BX die Biegeachse eingezeichnet und es ist ersichtlich, daß die Biegung der Platte um die Biegeachse BX - BX quer zur Längserstreckung der Stege erfolgen muß.

Mit 5 und 6 sind in der Plattenoberseite und/oder der Plattenunterseite vorgesehene Profilierungen bezeichnet, die schwalbenschwanzförmig gestaltet sind, wobei die geringere Öffnungsweite jeweils zur Außenseite der Platte hingerichtet ist.

Mit diesen schwalbenschwanzförmigen Profilierungen können in
Fig. 1 erkennbare Patrizenteile 7 zusammenwirken, die zusätzlich
zu ihrer Gestaltung derart, daß sie in die Profilierungen eingesetzt werden können, auch Mittel aufweisen können, die ein
Festlegen dieser Patrizenteile 7 in den Profilierungen 5 und 6
ermöglichen, so daß ein Verschieben der Patrizenteile dann, wenn
dies nicht gewünscht ist, verhindert werden kann.

Mit 8 ist in der in Fig. 1 gezeigten Ausführungsform ein Spannelement bezeichnet, das die einmal hergestellte Wölbung der
eigentlichen Platte aufrechterhält. Dieses Spannelement kann
durch ein weiteres Stützelement 9 zusätzlich mit der Platteninnenseite verbunden sein.

Zur Verdeutlichung dieses Erfindungsgedankens ist weiterhin mit
1o ein zusätzliches Spann- oder Konstruktionselement bezeichnet,
das der Verankerung der Platte am Boden oder auf einem entsprechenden Fundament dient.

Es ist erkennbar, daß die erfindungsgemäße Platte einmal unmittelbar, beispielsweise im Gewächshausbau, über dem Beet aufgestellt
werden kann, daß es aber in gleicher Weise möglich ist, derartige
Platten auf Grundmauern oder Stützmauern aufzusetzen. Auch liegt
es selbstverständlich im Rahmen der Erfindung, daß Platten der
in Fig. 1 dargestellten Ausführungsform in einer Vielzahl miteinander verbunden werden und so in ihrer Gesamtheit, beispielsweise
das Dach eines Gewächshauses, eines Schwimmbades oder einer großen
Halle bilden können.

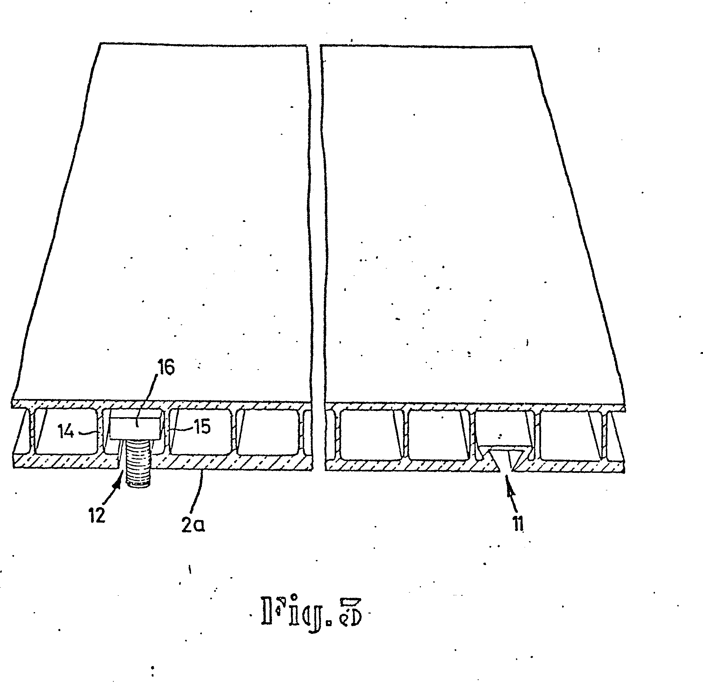

In Fig. 3 ist eine ebene Doppelstegplatte dargestellt, die mit einer schlitzförmigen Profilierung 11 ausgerüstet ist, in der die in Fig. 1 beispielsweise dargestellten Patrizenteile 7 eingesetzt werden können. Diese Patrizenteile 7 können, wie in der Beschreibungseinleitung erwähnt, quer zur Längsachse der Profilierung 11 beweglich sein und somit Wärmespannungen auszugleichen, wobei durch das Zusammenspiel der Bewegung in Längsachse der Profilierung 11 und der im Patrizenteil 7 vorgesehenen Bewegungsmöglichkeiten quer zu der erstgenannten Bewegungsmöglichkeit die gewünschte allseitige Freiheit erreicht wird.

In Fig. 3 ist weiterhin ein Einschnitt 12 dargestellt, der dadurch erzielt wird, daß die Plattenoberfläche 2a eingeschnitten wird oder diese Formgebung bereits im Herstellungsverfahren erhält, wodurch ein Schlitz erzielt wird, dessen Größe kleiner als der Abstand der Stege 14 und 15 voneinander ist. Durch diese Anordnung ist es möglich, ein T-förmiges Patrizenteil 16 einzusetzen, das nunmehr der Halterung der Platte dient. Bei dieser Ausführungsform ist es möglich, ebene Platten einfach durch die Anwendung der Konstruktionsteile, wie sie anhand von Fig. 1 erläutert worden sind, in ihrer Lage zu halten und dadurch beispielsweise ein Gewächshaus, eine Halle, eine Schwimmbadhalle od.dgl. zu erstellen. Fig. 3 zeigt, daß es dabei möglich ist, die Plattenfläche 2a verstärkt auszubilden.

Als Bauelement dienende Stegplatte

Patentansprüche

1. Als Bauelement dienende, aus einem durchsichtigen Kunststoff bestehende Stegplatte, vorzugsweise Doppel- oder
   Mehrfachstegplatte, gekennzeichnet durch eine Mehrzahl
   von Einschnitten (12) oder Ausnehmungen in wenigstens
   einer der durch Stege miteinander verbundenen Plattenflächen.

2. Stegplatte nach Anspruch 1, gekennzeichnet durch
   Parallel zu den Stegen (14, 15) die Platte durchquerende Einschnitte (12) oder Ausnehmungen.

3. Stegplatte nach den Ansprüchen 1 oder 2, gekennzeichnet
   durch einen Einschnitt (12), dessen Größe kleiner als der
   Abstand der Stege (14, 15) voneinander ist.

4.      Stegplatte nach Anspruch 3, dadurch gekennzeichnet,
        daß die die Einschnitte (12) aufweisende Plattenfläche (2a) verstärkt ausgebildet ist.


5.      Stegplatte nach Anspruch 1, gekennzeichnet durch quer
        zur Biegeachse (BX-BX) der Stegplatte (1) verlaufende,
        einteilig aus dem Plattenwerkstoff ausgeformte oder mit
        dem Plattenwerkstoff materialschlüssig verbundene Pro-
        filierungen (5, 6).


6.      Stegplatte wenigstens nach Anspruch 1, gekennzeichnet
        durch an der Ober- und/oder Unterseite (2, 3) einteilig
        aus der Platte (1), aus dem Plattenwerkstoff ausgeformte
        oder mit dem Plattenwerkstoff materialschlüssig ver-
        bundene Profilierungen.


7.      Stegplatte wenigstens nach Anspruch 5 und 6, dadurch
        gekennzeichnet, daß die Profilierungen (5, 6) schwalbenschwanzförmig ausgebildet sind, wobei die geringere
        Öffnungsweite zur Plattenoberfläche hingerichtet ist.


8.      Stegplatte nach einem oder mehreren der vorhergehenden
        Ansprüche, gekennzeichnet durch mit Einschnitten oder
        den Profilierungen (5, 6) in der Stegplatte (1) zusammenwirkende Patrizenteile (7), die zur Aufnahme und Halterung von Konstruktionselementen (8, 9, 1o) dienen.

- 3 -

0059965

9. Stegplatte nach Anspruch 8, <u>dadurch gekennzeichnet</u>, daß die mit den matrizenartigen Einschnitten oder Profilierungen (5, 6) zusammenwirkenden Patrizenteile (7) in den Profilierungen (5, 6) hinsichtlich in Längsrichtung der Profilierungen (5, 6) ausgerichteten Verschiebebewegungen festlegbar sind.

10. Stegplatte nach einem oder mehreren der vorhergehenden Ansprüche, <u>dadurch gekennzeichnet</u>, daß die in den Einschnitten oder Profilierungen (5, 6) verschieblichen und/oder festlegbaren Patrizenteile (7) quer zur Verschieberichtung in den Einschnitten oder Profilierungen verschieblich ausgebildet sind.

11. Verwendung der Stegplatten nach Anspruch 1 bis 1o im Gewächshausbau, insbesondere zur Ernteverfrühung bei Freilandgemüsebau.

Fig.1

BX

9

7

BX

8

10

1

Fig.2

5

2

4

3

6

Fig. 5

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-1 289 311  (BIERBRAUER) *Seite 1, Spalte 1, Zeilen 26-34; Figuren 1,5* | 1,2,3 | E 04 C    2/54 E 04 C    2/36 A 01 G    9/14 |
| A | GB-A-  714 784  (GARDEN PLASTIC) *Seite 2, Zeilen 37-52; Figur 1* | 1,6,11 | |
| A | FR-A-2 414 604  (RAVEL) *Seite  1, Zeilen 39-40; Seite 2, Zeilen 1-19; Figuren 1-4* | 1,6,11 | |
| A | FR-A-2 073 791  (CERANA) | | |
| A | DE-A-2 800 811  (OLTMANNS) *Seite  12,  Zeilen  13-24;  Seite 13, Zeilen 1-4; Figur 1* | 1,2 | |

RECHERCHIERTE SACHGEBIETE (Int. Cl. ³)

E 04 C
A 01 G    13/00
A 01 G     9/00
E 04 H

Der vorliegende Recherchenbericht wurde für alle Patentansprüche erstellt.

| Recherchenort DEN HAAG | Abschlußdatum der Recherche 16-06-1982 | Prüfer DALL'ANESE D.D. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82